# Europäisches Patentamt

# European Patent Office

# Office européen des brevets

(19)

(11) Numéro de publication: **0 171 763**
**B1**

(12) # FASCICULE DE BREVET EUROPÉEN

(45) Date de publication du fascicule du brevet:
**10.05.89**

(21) Numéro de dépôt: **85110003.2**

(22) Date de dépôt: **08.08.85**

(51) Int. Cl.⁴: **G 01 B 5/25,** G 01 B 5/00,
B 23 Q 3/18

(54) Dispositif d'autocentrage permettant le guidage d'un instrument de mesure ou d'un outil relatif à un objet oblong.

(30) Priorité: **14.08.84 LU 85509**

(43) Date de publication de la demande:
**19.02.86 Bulletin 86/8**

(45) Mention de la délivrance du brevet:
**10.05.89 Bulletin 89/19**

(84) Etats contractants désignés:
**AT BE CH DE FR GB IT LI LU NL SE**

(56) Documents cité:
**EP-A-0 076 419**
**GB-A-1 105 797**
**GB-A-2 097 561**
**US-A-2 304 670**
**US-A-3 066 254**

(73) Titulaire: **COMMUNAUTE EUROPEENNE DE
L'ENERGIE ATOMIQUE (EURATOM), Bâtiment
Jean Monnet Plateau du Kirchberg Boîte
Postale 1907, L-1019 Luxembourg (LU)**

(72) Inventeur: **Beaujoin, Daniel, Via Marconi, 52,
I-21027 Ispra (VA) (IT)**

(74) Mandataire: **Weinmiller, Jürgen, Lennéstrasse 9
Postfach 24, D-8133 Feldafing (DE)**

## Description

L'invention concerne un dispositif d'autocentrage permettant le guidage d'un instrument de mesure ou d'un outil par rapport à un objet oblong, dispositif conçu de telle façon que l'axe d'orientation dudit instrument ou outil soit horizontal et perpendiculaire à l'axe également horizontal de l'objet en question.

Un tel mécanisme est par exemple applicable, mais non exclusivement, à la gammagraphie de tubes dont l'intérieur est chargé d'incrustations irrégulières, afin de restituer une image de la géométrie interne. Ces tubes sont primitivement serrés entre deux pointes dont l'une, motrice, permet leur rotation. Une installation de mesure, en appui sur un chariot, se déplace le long d'une génératrice du tube. Une rotation lente de ce tube, jointe à une correction suivant un plan vertical de l'axe de l'instrument de mesure, permet l'exploration du tube à mesurer, même si celui-ci présente des déformations.

En pratique, en effet, le tube à étudier ne présente pas une géométrie idéale. On peut observer, par exemple, des courbures de type sinusoïdal le long de l'axe de rotation, jointes à des déformations des différentes sections suivant un plan transversal. De telles irrégularités ont pour effet de fausser la mesure, car, en l'absence de corrections adéquates, l'axe du tube, déformé, ne coincide pas nécessairement avec l'axe de l'installation de mesure gammagraphique.

On connaît dans la production des câbles électriques le phénomène que l'épaisseur de l'isolement autour du conducteur central varie sur la longueur du câble. Pour égaliser cette épaisseur, il faut enlever une partie de l'isolement d'un côté et en ajouter du côté opposé. Ainsi, le document GB-A-1 105 797 divulgue les caractéristiques techniques énoncées dans le préambule de la présente revendication 1 et propose un mécanisme muni de quatre leviers prenant appui sur la périphérie du câble pour dévier le câble perpendiculairement à son axe, sous la commande d'un dispositif détecteur de l'excentricité du conducteur central. Le câble ainsi positionné hors de son axe est alors soumis à une opération de coupe. Au lieu de leviers prenant appui direct sur le câble, le document propose aussi que cet appui se fasse par des barres courtes à crémaillières disposées de la même façon que les leviers-doubles qui engagent alors les leviers par l'intermédiaire de pignons.

Par ailleurs, on connaît par le document US-A-2 304 670 un dispositif de centrage utilisant un losange déformable. Le centrage s'effectue sur l'objet à usiner ensuite, et à cet égard le dispositif a une fonction analogue à celle décrite dans le document cité ci-dessus.

Aucun des dispositifs décrits ci-dessus ne permet donc à un instrument de mesure ou un outil de suivre un axe d'un objet oblong lorsque celui-ci est déformé.

L'invention a donc pour but de concevoir un dispositif permettant à l'axe de l'instrument de mesure de suivre au plus près l'axe de symétrie du tube à explorer, même si celui-ci présente des déformations géométriques par rapport à une configuration idéale.

Ce but est atteint, selon l'invention, par un dispositif tel que spécifié dans la revendication 1.

Grâce à l'invention, l'axe d'orientation s'ajuste en permanence au centre de la section en cours de l'exploration, même si l'axe du tube est déformé et même si ses sections sont de forme irrégulière.

De préférence, ledit ensemble est composé de deux crémaillères verticales dont chacune suit le mouvement vertical du palpeur qui lui est accouplé, et de deux pignons dont chacun engrène avec la crémaillère qui lui est relative, les axes des pignons étant solidaires du banc oscillant et accouplés en rotation.

Dans ce cas, il est avantageux, si l'accouplement des pignons s'effectue par l'intermédiaire d'une courroie crantée.

Dans une réalisation préférée de l'invention, les palpeurs s'appuient au contact de la périphérie dudit objet par l'intermédiaire de vérins pneumatiques.

De préférence, ledit banc oscillant est supporté par des vérins pneumatiques équilibrant la masse totale dudit banc augmentée de tous les éléments qui en forment l'ensemble tout en permettant son déplacement vertical dû aux oscillations des crémaillères.

L'invention sera décrite ci-dessous plus en détail, à l'aide du dessin ci-joint.

La figure 1 représente une vue schématique en coupe verticale du dispositif selon l'invention.

La figure 2 représente un détail du dispositif selon la fig. 1 vu suivant la coupe A - A de la figure 1. Le tracé virtuel du tube à explorer y a été représenté en traits fins interrompus, car il n'est normalement pas visible dans cette coupe.

L'objet à explorer est ici un tube 1, dont on veut connaître l'épaisseur d'incrustation 2 par une évaluation gammagraphique. Ce tube est fixé entre une pointe motrice 3 assurant sa mise en rotation autour de l'axe 5 et une contrepointe 4, l'axe 5 constituant la ligne de conjonction entre les pointes 3 et 4.

Le tube 1 est monté horizontalement sur un banc sur lequel est appuyé un chariot d'exploration longitudinale 10, supportant un banc oscillant 13 solidaire lui-même de l'instrument de mesure.

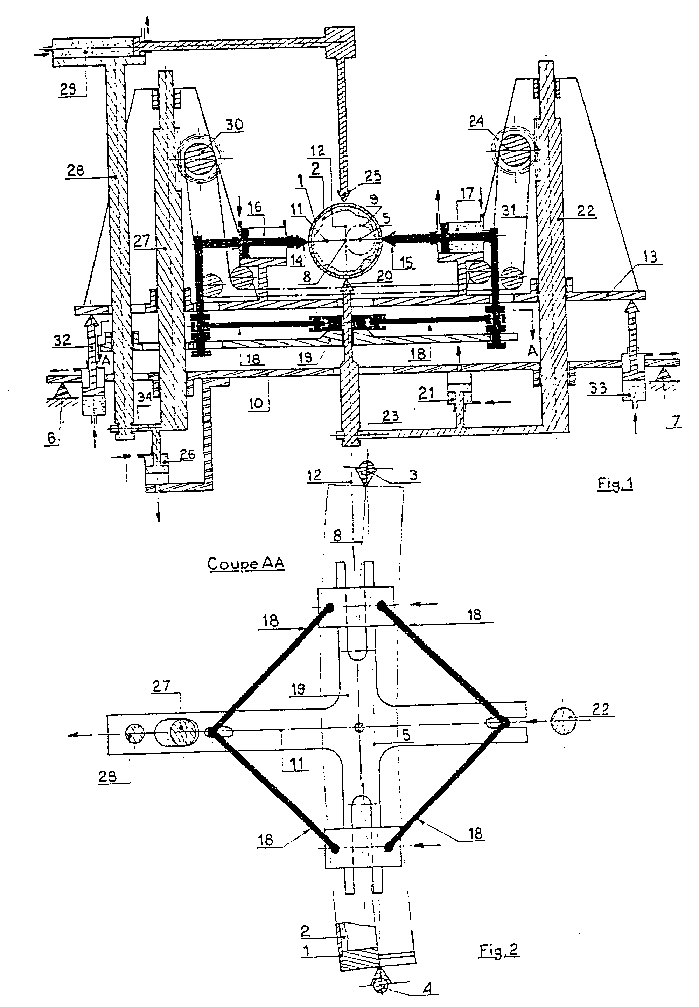

La masse de l'ensemble du dispositif de mesure est equilibrée au moyen des appuis mobiles 6 et 7 (fig. 1).

Le banc oscillant 13 peut se déplacer parallèlement suivant l'axe longitudinal 5.

Sur les dessins, on a représenté le tube affecté d'un cintrage régulier entre ces pointes 3 et 4. Pour une section considérée, telle que celle visible sur la figure 1, l'axe 5 est excentré par rapport au centre 8 du tube. Lorsque le tube est en rotation, le centre 8 de la section considérée du tube décrit une trajectoire circonférentielle 9 autour du point 5.

Toujours en référence à la figure 1, on peut voir une plaque de base 10 figurant le chariot d'une machine se déplaçant parallèlement à la ligne comprise entre les pointes 3 et 4. Ce chariot supporte le banc oscillant 13, solidaire de l'instrument de mesure et des palpeurs horizontaux 14 et 15.

Afin de ne pas surcharger le dessin, l'instrument de mesure n'a pas été représenté. On peut toutefois considérer, par analogie, l'axe de cet instrument en coincidence avec l'axe des palpeurs horizontaux 14 et 15. Il est composé d'une source gamma, située dans le même alignement que le palpeur 15, et d'un révélateur gamma situé dans le même alignement que le palpeur 14. Ces deux palpeurs et, partant de là, l'axe de mesure gammagraphique 11, sont situés suivant un axe parallèle et immuable à la plateforme du banc oscillant 13. Comme décrit plus avant, le banc oscillant 13 suit lui-même le déplacement du centre mobile 8 dans sa course verticale par rapport à l'axe 5.

Les deux palpeurs 14 et 15 restent en permanence au contact des génératrices du tube 1 au moyen d'une légère pression pneumatique exercée dans deux vérins 16 et 17. Ces deux palpeurs sont accouplés à un losange déformable 18, situé suivant un plan parallèle au banc oscillant 13 et au dessous de ce dernier.

L'axe transversal de ce losange déformable muni de glissières, guide un plateau 19 comportant des ajours de type "croix de Malte". Ce plateau comporte des coulisses verticales permettant le déplacement vertical de deux palpeurs 20 et 25, tout en assurant la translation simultanée de ceux-ci.

La représentation schématique fait apparaître les palpeurs 14 et 15 suivant leur position extrême de déport vers la gauche qui constitue le débattement maximum possible offert par la machine.

Le palpeur 20 peut se déplacer verticalement jusqu'à la limite engendrée par le contact avec la génératrice inférieure du tube, ceci par poussée pneumatique d'un vérin 21.

Ce vérin, de fonction similaire pour le palpeur 20 à celle du vérin 16 pour le palpeur 14, est solidaire du chariot 10. Son piston est solidaire d'une crémaillère 22, dont la partie inférieure se prolonge d'une glissière 23 engagée à la base du palpeur 20. De la sorte, ce dernier est supporté dans son axe vertical 12 par cette glissière, tout en pouvant se déplacer transversalement par l'intermédiaire du losange déformable 18.

La crémaillère 22 engrène avec un pignon 24 dont l'axe est solidaire du banc oscillant 13.

Par le même moyen, le palpeur 25 coulisse verticalement dans le plateau à glissière 19, et dans l'alignement du palpeur 20 suivant l'axe vertical 12, en contact permanent avec la génératrice supérieure du tube 1. La force d'appui est engendrée par un vérin 26 dont la fonction est exactement similaire à celle du vérin 21 à l'égard du palpeur 20, mais a contresens.

Le piston du vérin 26 est solidaire d'une deuxième crémaillère 27 dont le prolongement inférieur, constitué par une glissière 34, la solidarise avec une colonne 28 chargée de transmettre le déplacement vertical du palpeur 25.

Cette colonne coulisse verticalement dans le plateau à glissière 19 qui, par l'intermédiaire du losange déformable 18, lui permet un mouvement de translation simultanément avec le palpeur 20.

Un cylindre 29 est destiné à escamoter le palpeur 25 afin de libérer la partie centrale du banc, permettant ainsi les opérations de chargement et de déchargement du tube 1.

La crémaillère 27 engrène avec un pignon 30 dont l'axe est solidaire du banc oscillant 13. Les deux pignons 24 et 30 sont accouplés au moyen d'une courroie crantée 31. Ainsi, le moindre mouvement de rotation de l'un de ces deux pignons est immédiatement transmis à l'autre.

Des vérins 32 et 33, montés sur le chariot d'exploration longitudinale 10, équilibrent la masse de l'ensemble du banc oscillant 13 dont le déplacement vertical est soumis au déplacement vertical des palpeurs 20 et 25.

Ce dispositif est décrit ci-après dans le détail, en considérant les trois principaux cas de figure, à savoir un tube idéal, un tube cintré et un tube de section déformée.

Dans le cas d'un tube idéal, l'axe 5 coincide avec l'axe 8. Le banc oscillant 13 s'ajuste à un niveau tel que l'axe de mesure 11 intersecte l'axe vertical 12 à mi-distance des points de contact des palpeurs 20 et 25 avec leurs génératrices respectives sur le tube 1, les palpeurs 14 et 15 effectuant le centrage des deux palpeurs verticaux. Les quatre palpeurs sont mus par l'intermédiaire des vérins pneumatiques 16, 17, 21 et 26. On ne peut constater alors aucun déplacement des palpeurs lorsque le tube 1 de géométrie idéale tourne autour de son axe 8 et que se déplacent conjointement le chariot 10 et le banc 13 suivant l'axe longitudinal 5 du tube 1. L'axe de mesure 11 intersecte toujours dans des conditions parfaites l'axe 8 et l'axe 12 entre les palpeurs 20 et 25.

Dans le cas d'un tube cintré, qui est représenté sur les dessins, la rotation du tube 1 autour de ses points extrêmes 3 et 4 fait que le centre 8 du tube 1 décrit une trajectoire circonférentielle 9 autour de l'axe 5.

Les quatre palpeurs 14, 15, 20 et 25, qui s'appuient sur les génératrices du tube, sont donc amenés à parcourir un mouvement oscillant.

Si l'on considère en premier lieu les palpeurs 14 et 15, disposés sur l'axe de mesure 11, on peut voir que leur déplacement à travers le losange déformable 18 et le plateau de guidage 19 conduit les palpeurs 20 et 25 à une position telle que l'axe vertical 12 de ces derniers intersecte toujours l'axe de mesure 11 à égale distance des points de contact des palpeurs 14 et 15 avec les génératrices du tube 1.

Le même résultat se vérifie lorsque le centre 8 de la section considérée se trouve à la verticale de la ligne 5. Dans ce cas, le pâlpeur 25 se déplace verticalement vers le haut, entraînant simultanément la crémaillère 27, alors que le palpeur 20, en se déplacant verticalement vers le haut lui aussi, entraîne simultanément la crémaillère 22. Etant donné que les deux crémaillères sont synchronisées, les deux pignons 24 et 30 ne sont pas entraînés en rotation et le banc oscillant 13 se déplace verticalement vers le haut de la même valeur que les crémaillères 22 et 27. L'axe de mesure 11 coupe donc de nouveau l'axe vertical au centre 8 du tube 1.

Une considération similaire s'applique lorsque le tube, à un moment donné de l'exploitation, infléchit sa courbure vers le bas. Dans les positions intermédiaires parçourues lors de la rotation du tube 1, on peut observer un mouvement combiné des quatre palpeurs de telle sorte que l'axe vertical 12 et l'axe de mesure 11 se coupent à chaque instant au centre 8 de la section considérée du tube 1. Les pignons 24 et 30 restent privés de mouvement de rotation aussi longtemps que la périphérie de la section considérée du tube 1 reste cylindrique.

Lorsque le tube présente des déformations suivant une ou plusieurs sections transversales, il faut procéder à une rédéfinition du centre 8 de la ou des sections considérées. Pour l'exploration gammagraphique, le centre de la section du tube 1 est défini par intersection entre l'axe des palpeurs 14 et 15 et l'axe des palpeurs 20 et 21, cette intersection étant réalisée à mi-distance des deux points de contact de chacun des couples de palpeurs. Les palpeurs 14 et 15, puis 20 et 25, peuvent alors se rapprocher ou s'éloigner l'un de l'autre. Lorsque les palpeurs 14 et 15 sont animés de mouvements de sens contraire, ils entraînent la déformation du losange 18, mais le palpeur 20 reste toujours centré entre les deux points de contact des palpeurs 14 et 15. La même remarque s'applique au palpeur 25, accouplé au palpeur 20 par l'intermédiaire du plateau à glissière 19.

Lorsqu'une déformation similaire se présente verticalement, les deux crémaillères 22 et 27 ne se déplacent plus simultanément dans le même sens, comme dans le cas précédent, mais on observe au contraire un mouvement de montée de l'une des crémaillères et un mouvement de descente de l'autre. Dans ce cas, les pignons 22 et 27 sont entraînés en rotation, et, ceux-ci étant solidaires du banc oscillant 13, ledit banc est animé d'un mouvement vertical tel que l'axe de mesure 11 coupe à chaque instant, comme précédemment, le centre 8 de la section considérée.

Le mécanisme devient plus compréhensible si l'on imagine de remplacer les deux pignons 24 et 30 par un seul, intercalé entre les deux crémaillères 22 et 27 agissant parallèlement. Un tel pignon unique, solidaire du banc oscillant 13, subirait les mêmes mouvements que les deux pignons 24 et 30 accouplés par la courroie 31, à savoir un mouvement rectiligne vertical, lorsque les deux crémaillères se déplacent dans le même sens et d'une même distance, ou un mouvement de rotation sans déplacement vertical, lorsque les deux crémaillères se déplacent en sens opposé mais d'une distance égale.

Dans tous les autres cas, on observe un mouvement de rotation combiné à un déplacement vertical.

L'axe du pignon parcourt toujours la demi-somme des deux déplacements combinés des crémaillères.

Le montage à deux pignons 24 et 30 accouplés au moyen de la courroie 31 ne change rien aux différents cas de figure exposés précédemment, mais, en obligeant la courroie à une déviation autour de pignons de renvoi, permet le libre espace nécessaire au changement et à la rotation du tube 1.

Il est à noter que l'invention n'est pas limitée à la mesure gammagraphique d'un tube mais qu'elle peut s'appliquer généralement à l'exploration ou à l'usinage d'objets oblongs de formes géométriquement mal définies.

On peut utiliser ce type de dispositif pour le relevé de dimensions extérieures en renvoyant les informations fournies par les palpeurs vers un enregistreur.

On peut également l'utiliser comme machine à reproduire des objets oblongs de formes diverses.

Une autre application concerne le marquage d'une ligne génératrice d'un tube ou de plusieurs lignes génératrices.

Une autre application encore concerne la soudure de deux demi-coquilles dont le plan de joint ne serait pas rectiligne.

On peut aussi envisager ce même dispositif appliqué à différents appareils de mesure optiques, électriques ou ultrasonores toujours sur le même type d'objet oblong.

Dans le cadre de l'invention, certains détails peuvent être envisagés différemment. Par exemple, la poussée imprimée aux palpeurs à travers un vérin pneumatique peut aussi bien être substituée par des systèmes de poussée par ressort, par contrepoids, et les vérins d'équilibrage 32 et 33 peuvent être remplacés par un moteur ou un contrepoids.

Les différents vérins pneumatiques peuvent être associés à des unités de régulation de pression ainsi que de réglage de débit, tant de fuite que d'admission. On obtient ainsi un système totalement équilibré, permettant de jouer sur les efforts d'appui des palpeurs sur le tube à explorer.

## Revendications

Dispositif d'autocentrage permettant le guidage d'un instrument de mesure ou d'un outil par rapport à un objet oblong (1), conçu de telle façon que l'axe d'orientation (11) dudit instrument ou outil soit horizontal et perpendiculaire à l'axe (8), également horizontal, de l'objet (1) en question, ledit dispositif comprenant:
- quatre palpeurs (14, 15, 20, 25) qui prennent appui par paires de part et d'autre dudit objet, les deux premiers de ces palpeurs (14 et 15) étant alignés suivant l'axe d'orientation (11), et les deux seconds (20 et 25) étant alignés suivant un axe vertical (12) coupant l'axe d'orientation, le dispositif étant caractérisé en ce que:
- les deux premiers palpeurs (14 et 15) sont accouplés à un losange déformable (18) et à un glissière (19) assurant le guidage latéral des seconds palpeurs (20 et 25) de telle sorte que l'axe vertical (12) coupe l'axe d'orientation (11) à mi-distance des deux points de contact des deux premiers palpeurs (14 et 15),
- et que les deux seconds palpeurs (20 et 25) sont accouplés par l'intermédiaire d'un ensemble pignon-crémaillière-glissière (22, 23, 24) d'une part, et d'un ensemble similaire (28, 30, 34) d'autre part, à un banc oscillant (13) supportant les deux premiers palpeurs (14 et 15) ainsi que l'instrument de mesure ou l'outil respectivement, de telle sorte que l'axe d'orientation (11) coupe l'axe vertical (12) à mi-distance des points de contact des deux seconds palpeurs (20 et 25).

2. Dispositif suivant la revendication, 1, caractérisé en ce que ledit ensemble est composé de deux crémaillères verticales (22 et 27) dont chacune suit le mouvement vertical du palpeur (20 ou 25) qui lui est accouplé, et de deux pignons (24 et 30), dont chacun engrène avec la crémaillère (22 ou 27) qui lui est relative, les axes des pignons étant solidaires du blanc oscillant (13) et accouplés en rotation.

3. Dispositif selon la revendication 2, caractérisé en ce que l'accouplement des pignons (24 et 30) s'effectue par l'intermédiaire d'une courroie crantée (31).

4. Dispositif suivant l'une des revendications 1 à 3, caractérisé en ce que les palpeurs (14, 15, 20, 25) s'appuient au contact de la périphérie dudit objet (1) par l'intermédiaire de vérins pneumatiques (16, 17, 21, 26).

5. Dispositif suivant l'une des revendications 1 à 4, caractérisé en ce que ledit banc oscillant (13) est supporté par des vérins pneumatiques (32 et 33) équilibrant la masse totale dudit banc augmentée de tous les éléments qui en forment l'ensemble tout en permettant son déplacement vertical dû aux oscillations des crémaillères (22 et 27).

## Patentansprüche

1. Vorrichtung zur Selbstzentrierung, die es erlaubt, ein Meßinstrument oder ein Werkzeug in Bezug auf einen länglichen Gegenstand (1) zu führen, wobei die Vorrichtung derart ausgebildet ist, daß die Ausrichtungsachse (11) des Instruments oder des Werkzeugs waagerecht und senkrecht zur ebenfalls waagerechten Achse (8) des betreffenden Gegenstands verläuft und die Vorrichtung vier Taster (14, 15, 20, 25) aufweist, die sich paarweise beidseitig an dem Gegenstand abstützen, wobei die ersten beiden Taster (14 und 15) zur Ausrichtungsachse (11) fluchtend und die beiden zweiten Taster (20 und 25) zu einer die Ausrichtungsachse senkrecht schneidenden Achse (12) fluchtend angeordnet sind, dadurch gekennzeichnet, daß
- die beiden ersten Taster (14 und 15) an ein formveränderliches Rautengestänge (18) und eine Gleitführungsplattform (19) gekuppelt sind, die die seitliche Führung der zweiten Taster (20 und 25) bewirken, derart, daß die senkrechte Achse (12) die Ausrichtungsachse (11) auf halbem Weg zwischen den beiden Berührungspunkten der beiden ersten Taster (14 und 15) schneidet,
- und daß die zweiten Taster (20 und 25) über eine Baugruppe aus Ritzel-Zahnstange-Gleitschiene (22, 23, 24) einerseits, und eine ähnliche Baugruppe (28, 30, 34) andererseits an eine schwingende Bank (13) angekuppelt ist, welche die ersten beiden Taster (14 und 15) sowie das Meßinstrument bzw. das Werkzeug trägt, derart, daß die Ausrichtungsachse (11) die senkrechte Achse (12) in der Mitte zwischen den Berührungspunkten der beiden zweiten Taster (20 und 25) schneidet.

2. Vorrichtung nach Anspruch 1, dadurch gekennzeichnet, daß die Baugruppe aus zwei senkrechten Zahnstangen (22 und 27), von denen jede der senkrechten Bewegung des mit ihr gekuppelten Tasters (20 oder 25) folgt, und aus zwei Ritzeln (24 und 30) besteht, von denen jedes mit der ihr zugehörigen Zahnstange (22 oder 27) kämmt, wobei die Achsen der Ritzel mit der schwingenden Bank (13) fest verbunden und in Drehrichtung miteinander gekoppelt sind.

3. Vorrichtung nach Anspruch 2, dadurch gekennzeichnet, daß die Kopplung der Ritzel (24 und 30) über einen gerippten Treibriemen (31) erfolgt.

4. Vorrichtung nach einem der Ansprüche 1 bis 3, dadurch gekennzeichnet, daß sich die Taster (14, 15, 20, 25) über pneumatische Stempel (16, 17, 21, 26) auf der Oberfläche des Gegenstandes (1) abstützen.

5. Vorrichtung nach einem der Ansprüche 1 bis 4, dadurch gekennzeichnet, daß die schwingende Bank (13) durch pneumatische Stempel (32, und 33) getragen wird, welche die gesamte Masse der Bank, vermehrt um alle Bauteile, die mit ihr eine Baugruppe bilden, ausbalanciert, aber zugleich ihre senkrechte Verschiebung auf Grund der Hin- und Herbewegungen der Zahnstangen (22 und 27) zuläßt.

## Claims

1. A self-centring device for guiding a measuring instrument or a tool relative to an elongated object, the device being designed in such a manner that the axis of orientation (11) of said instrument or tool is disposed horizontally and perpendicularly to the axis (8) of the object (1) referred to, which is also horizontal, and comprising:
- four tracers (14, 15, 20, 25) which bear pairwise at either side upon said object, the two first tracers (14 and 15) being aligned with the axis of orientation (11) and the two second tracers (20 and 25) being aligned with a vertical axis (12) intersecting the axis of orientation, the device being characterized in that:
- the two first tracers (14 and 15) are coupled to a deformable rhombic frame (18) and to a slide-way platform (19) adapted to ensure the lateral guidance of the second tracers (20 and 25), such that the vertical axis (12) intersects the axis of orientation (11) mid-way between the two contact points of the first two tracers (14 and 15),
- and that the second two tracers (20 and 25) are coupled via an assembly comprising a pinion, a rack and a slide-way (22, 23, 24) on the one hand, and a similar assembly (28, 30, 34) on the other hand to an oscillating bench (13) adapted to support the first two tracers (14 and 15) as well as the measuring instrument or the tool respectively, such that the axis of orientation (11) intersects the vertical axis (12) mid-way between the contact points of the two second tracers (20 and 25).

2. A device according to claim 1, characterized in that said assembly is composed of two vertical racks (22 and 27), each of which follows the vertical movement of the tracer (20 or 25) coupled thereto, and of two pinions (24 and 30), each of which meshes with the rack (22 or 27) related thereto, the axes of the pinions being fixed to the oscillating bench (13) and rotatively coupled one to the other.

3. A device according to claim 2, characterized in that the coupling of the pinions (24 and 30) is effected via a toothed belt (31).

4. A device according to one of the claims 1 to 3, characterized in that the tracers (14, 15, 20, 25) bear against the periphery of said object (1) by means of pneumatic jacks (16, 17, 21, 26).

5. A device according to one of claims 1 to 4, characterized in that said oscillating bench (13) is supported by pneumatic jacks (32 and 33) adapted to balance the total mass of said bench, increased by all of the elements constituting an assembly therewith, while permitting its vertical displacement caused by the oscillating movements of the racks (22 and 27).

Fig. 1

Coupe AA

Fig. 2